# EUROPEAN PATENT APPLICATION

(11) **EP 2 341 420 A1**
(43) Date of publication of application: **06.07.2011**
(21) Application number: 10150059.3
(22) Date of filing: 04.01.2010
(51) Int. Cl.: G06F 3/048, G06F 3/033

(54) **Portable electronic device and method of controlling same**

(71) Applicant: RESEARCH IN MOTION LIMITED, Waterloo, Ontario N2L 3W8 (CA)
(72) Inventor: Skarine, Alexei, Waterloo Ontario N2L 3W8 (CA); Kornilovsky, Alexander, Waterloo Ontario N2L 5Z5 (CA); Fux, Vadim, Waterloo Ontario N2L 5Z5 (CA)
(74) Representative: Fennell, Gareth Charles

(57) **Abstract**

A method of controlling a portable electronic device includes rendering characters on a display of the portable electronic device, detecting a touch and determining a touch location on a touch-sensitive input device, determining a plurality of the characters that are rendered near the touch location, the plurality of the characters rendered in a first area, and re-rendering the plurality of the characters in a second area, the second area being larger than the first area.

## Description

### FIELD OF TECHNOLOGY

The present disclosure relates to portable electronic devices, including but not limited to portable electronic devices having touch screen displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive input device such as a touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

Improvements in electronic devices with touch-sensitive devices are desirable.

### SUMMARY

A method of controlling a portable electronic device includes rendering characters on a display of the portable electronic device, detecting a touch and determining a touch location on a touch-sensitive input device, determining a plurality of the characters that are rendered near the touch location, the plurality of the characters rendered in a first area, and re-rendering the plurality of the characters in a second area, the second area being larger than the first area.

A computer-readable medium has computer-readable code embodied therein that is executable by a processor of a portable electronic device to perform the above method.

A portable electronic device includes a display configured to display characters, a touch-sensitive input device configured to receive a touch and determine a touch location, and a processor. The processor is configured to determine a plurality of the characters that are displayed near the touch location. The plurality of characters are rendered in a first area. The processor is also configured to cause the display to display the plurality of the characters in a second area. The second area is larger than the first area.

A method includes rendering characters on a display of a portable electronic device, detecting a touch and determining a touch location along a touch-sensitive strip, identifying a plurality of the characters that are rendered near the touch location, the plurality of the characters rendered in a first area, re-rendering the identified plurality of characters in a second area, the second area being larger than the first area, and rendering an indicator to indicate one of the identified plurality of characters based on the touch location.

### BRIEF DESCRIPTION OF THE DRAWINGS

FIG. 1 is a block diagram of a portable electronic device in accordance with the present disclosure.

FIG. 2 is a flowchart illustrating a method of controlling a portable electronic device in accordance with the present disclosure.

FIG. 3 illustrates a front view of an example of a portable electronic device before and after receiving a touch at touch-sensitive strip, in accordance with the present disclosure.

FIG. 4 illustrates a front view of an example the portable electronic device of FIG. 3, before and after a change in touch location, in accordance with the present disclosure.

FIG. 5 illustrates a front view of another example of a portable electronic device before and after receiving a touch at a touch-sensitive strip, in accordance with the present disclosure.

FIG. 6 illustrates a front view of another example of a portable electronic device before and after receiving a touch at a touch-sensitive strip, in accordance with the present disclosure.

### DETAILED DESCRIPTION

The following describes an apparatus for and method of controlling an electronic device. Characters are displayed on a display of the portable electronic device. A touch is detected and the touch location is determined. A plurality of the characters that are displayed near the touch location are determined. The plurality of characters are displayed in first area. The plurality of characters are re-rendered in a second area that is larger than the first area.

For simplicity and clarity of illustration, reference numerals may be repeated among the figures to indicate corresponding or analogous elements. Numerous specific details are set forth to provide a thorough understanding of the embodiments described herein. The embodiments may be practiced without these specific details. In other instances, well-known methods, procedures, and components have not been described in detail so as not to obscure the embodiments described herein. The description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities such as a handheld electronic game device, digital photograph album, digital camera, or other device.

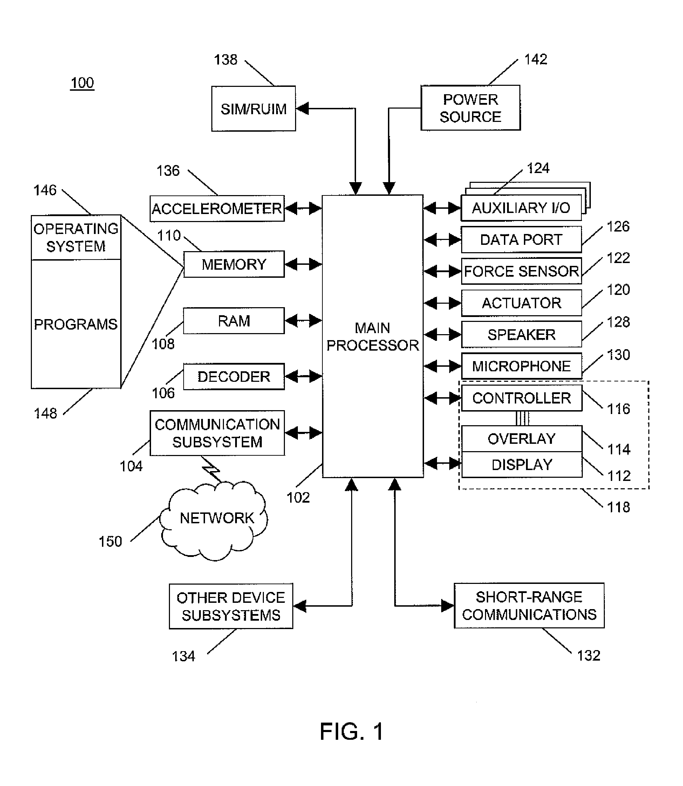

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and dual-mode networks that support both voice and data communications. A power source 142, such as one or more rechargeable batteries or a port to another power supply, powers the portable electronic device 100.

The processor 102 interacts with other devices, such as a Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. User interaction with a graphical user interface is performed through the touch-sensitive overlay 114. The processor 102 interacts with the touch-sensitive overlay 114 via the electronic controller 116. Information, such as text, characters, characters, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into the memory 110.

The portable electronic device 100 also includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, or surface acoustic wave (SAW) touch-sensitive display, as known in the art. A capacitive touch-sensitive display includes the display 112 and a capacitive touch-sensitive overlay 114. The overlay 114 may be an assembly of multiple layers in a stack including, for example, a substrate, LCD display 112, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118 and processed by the processor 102, for example, to determine a location of a touch. Touch location data may include a single point of contact, such as a point at or near a center of the area of contact, or the entire area of contact for further processing. The location of a touch detected on the touch-sensitive display 118 may include x and y components, e.g., horizontal and vertical with respect to one's view of the touch-sensitive display 118, respectively. For example, the x location component may be determined by a signal generated from one touch sensor layer, and the y location component may be determined by a signal generated from another touch sensor layer. A signal is provided to the controller 116 in response to detection of a suitable object, such as a finger, thumb, or other items, for example, a stylus, pen, or other pointer, depending on the nature of the touch-sensitive display 118. More than one simultaneous location of contact may occur and be detected.

The actuator 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 provides the user with tactile feedback.

Optionally, a mechanical dome switch actuator may be utilized to provide tactile feedback when the dome collapses due to imparted force and when the dome returns to the rest position after release of the switch.

Alternatively, the actuator 120 may comprise one or more piezoelectric (piezo) actuators that provide tactile feedback. Contraction of the piezo actuator(s) applies a spring-like force against the touch-sensitive display 118. Each piezo actuator includes a piezoelectric device, such as a piezoelectric ceramic disk adhered to a substrate such as a metal substrate. The substrate bends when the piezoelectric device contracts diametrically due to build up of charge at the piezoelectric device or in response to an external force applied to the touch-sensitive display 118. The charge/voltage may be adjusted by varying the applied voltage or current, thereby controlling the force applied by the piezoelectric devices on the touch-sensitive display 118. The charge/voltage across the piezo actuator may be removed by a controlled discharge current that causes the piezoelectric device to expand diametrically, releasing the force thereby decreasing the force applied by the piezoelectric devices on the touch-sensitive display 118. The charge/voltage may advantageously be removed over a relatively short period of time to provide tactile feedback to the user. Absent an external force applied to the overlay 114 and absent a charge/voltage on the piezoelectric devices, the piezoelectric devices may be slightly bent due to a mechanical preload.

The touch-sensitive display 118 is configured to display information from an application, such as a web browser, contacts, email, calendar, music player, spreadsheet, word processing, operating system interface, and so forth. The information may be text, characters, images, and any other characters. Additionally, the touch-sensitive display 118 is configured to display selectable characters for addition to the information. The selectable characters may be displayed, for example, below the information in the orientation in which the portable electronic device 100 is held. Because a touch-sensitive display 118 on a portable electronic device 100 is typically relatively small, the area in which the selectable characters are displayed may be very small to provide a comparatively large area for displaying the information. The text of an electronic message being composed, details of a calendar event being created, details of a contact being created or edited or any other suitable information may be displayed in a relatively large area of the touch-sensitive display 118 compared to the characters displayed for selection.

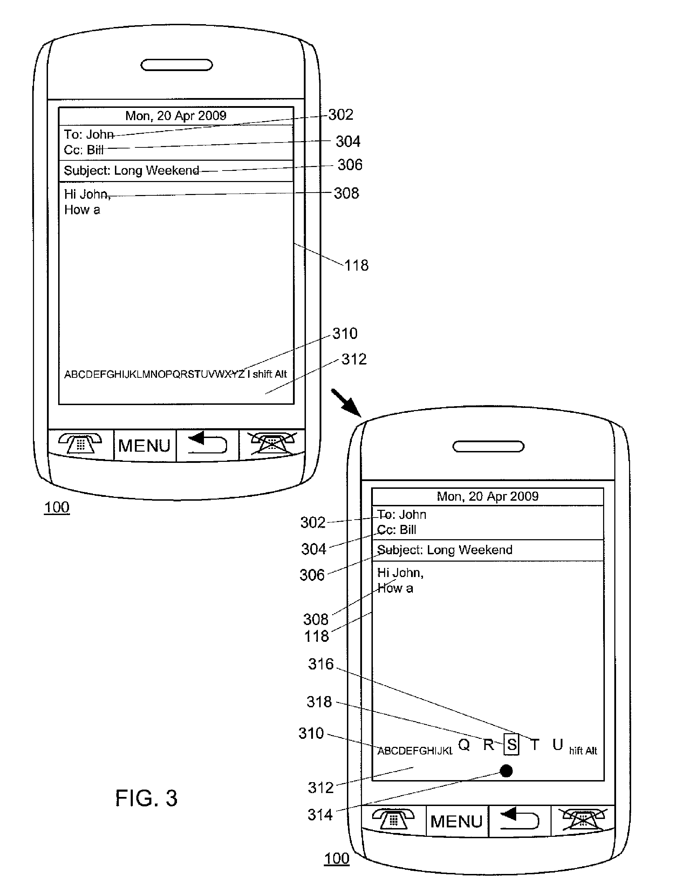

Although the characters shown in the examples of FIG. 3 through FIG. 6 include the letters of the standard English alphabet, other characters may be rendered for selection. Characters include, for example, letters, numbers, punctuation, symbols, mathematical characters, characters from other alphabets or representations from other languages such as hieroglyphs or Chinese characters, and so forth. Characters may also include objects or words representing functions such as "Alt" and "Shift" as well as any other object representing a function.

Each application typically includes at least one map of locations associated with selectable features displayed for the application. The map of locations associates an area on the touch-sensitive display for each selectable feature, including each of the selectable characters displayed. When a touch is detected and the location of the touch is determined to fall within the area associated with one of the characters, a plurality of characters is identified. The identified characters include the closest character to the touch along with nearby characters. The identified characters are displayed in a larger area compared to the area that the identified characters were originally displayed in and the area associated with each identified character is also increased to facilitate selection.

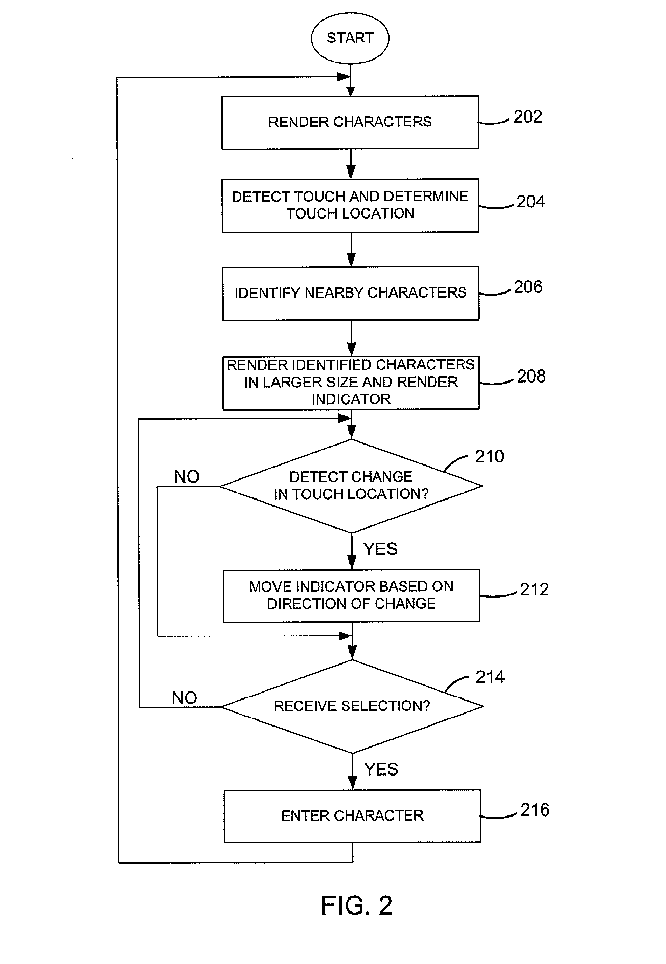

FIG. 2 is a flowchart illustrating a method of controlling an electronic device 100. The method may be carried out by software executed by, for example, the processor 102. Coding of software for carrying out such a method is within the scope of a person of ordinary skill in the art given the present description.

Characters are rendered on the touch-sensitive display 118 along with information from an application. When a touch is detected 204 in an area that is associated with the characters, the touch location on the touch-sensitive display 118 is determined. Based on the touch location, the plurality of characters, including the nearest character to the location of the touch and one or more nearby characters are identified 206. The identified characters are rendered 208 in an area that is larger, relative to the area in which the same characters were displayed at 202, to facilitate selection of one of the identified characters. The area associated with each of the identified characters is larger than the previous area for each of the characters. An indicator such as, for example, a cursor, highlighting, a selection box, a change in font color, a pointer, or any other suitable indicator, is also rendered to identify the character that is associated with the area at which the touch is located. When the location of touch changes while maintaining touch contact, e.g., caused by dragging a finger or stylus, on the touch-sensitive display 118, the change is detected 210 and the indicator is moved 212 to a second character in the plurality of characters when the new touch location is closer to the second character. When a selection is received 214, the character is entered 216 and the process continues at 202. When a selection is not received 214, for example, after a period of time, the process continues at 210.

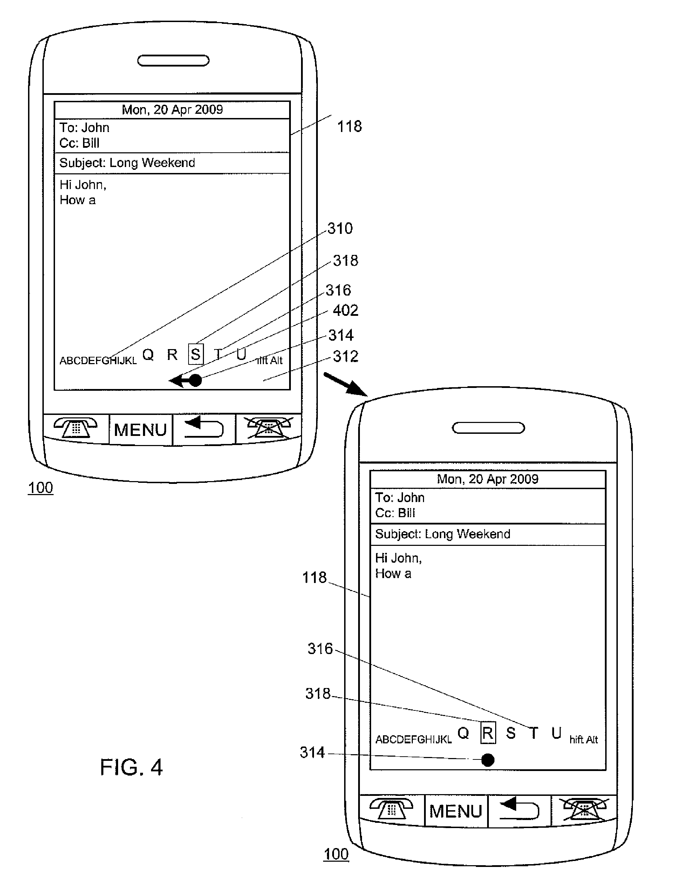

A front view of an example of a portable electronic device 100 including a touch-sensitive display 118 before and after receiving a touch is shown in FIG. 3 and an example of the portable electronic device 100 before and after a change in touch location is shown in FIG. 4. In the examples of FIG. 3 and FIG. 4, an email is composed via an email application on the portable electronic device 100. Information is entered and displayed in email fields, including a "To" field 302, a "Cc" field 304, a "Subject" field 306 and a body field 308, on the touch-sensitive display 118. Characters 310, which in the present example, include alphabetical letters, a "shift", and an "Alt" selection, are rendered below the email fields in a single, generally horizontal line. The area associated with the characters 310 is located adjacent to and below the line, at the bottom of the touch-sensitive display 118. The area may be in the shape of a strip 312 as shown in FIG. 3 and FIG. 4 or may be any other suitable shape.

To select a letter to add to the body field 308, a touch 314 is received on the strip 312 on the touch-sensitive display 118. The touch is received near the desired letter and the touch is detected. The touch 314 is located on the strip 312, closest to the letter "S". A plurality of characters, which may include 3 or more characters, are identified. In the example shown in FIG. 3, the plurality of characters includes the letter "S" and the two letters on each side of the S are identified. The plurality of characters 316 including the letters "Q", "R", "S", "T", and "U" are rendered in a larger size and with greater spacing between the letters than the spacing prior to detecting the touch. The area along the strip that is associated with the identified letters is also increased in size and the letter "S" is indicated, for example, by a selection box 318 rendered around the displayed letter.

A change in touch location along the strip 312 is illustrated by the arrow 402 in FIG. 4 as the touch location is moved to an area that is closer to the letter "R". The change in touch location is detected and the letter "R" is indicated by the selection box 318. The letter may be selected for entry into the body field 308 in any suitable manner. Optionally, the letter may be selected when a threshold force on the touch-sensitive display 118 is exceeded. Alternatively, the letter may be selected when the touch ends or when a further input is received such as input from a button or from the dome switch actuator when a dome switch actuator is utilized.

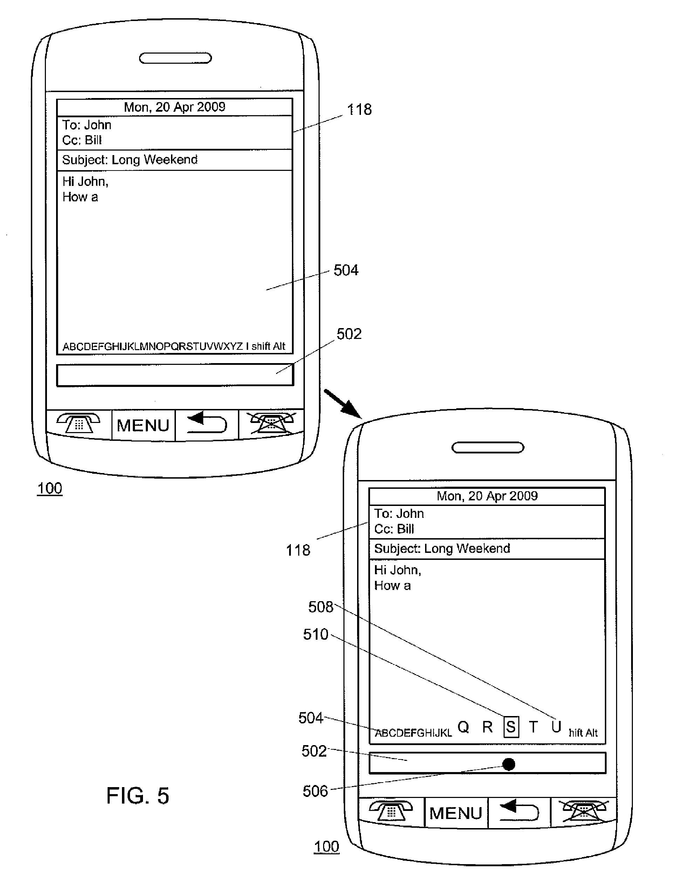

A front view of another example of a portable electronic device 100 before and after receiving a touch at a touch-sensitive strip is shown in FIG. 5. In the example of FIG. 5, the portable electronic device 100 includes a touch-sensitive strip 502 in addition to the touch-sensitive display 118. The touch-sensitive strip 502 may be a capacitive touch-sensitive strip, a resistive touch-sensitive strip or any other suitable touch-sensitive strip for detecting one or more touches along the strip. The touch-sensitive strip 502 may be connected to the processor 102 through the controller 116, or may be connected via another controller. A touch on the touch-sensitive strip 502 may be detected and processed by the processor 102, for example, to determine the location of touch on the touch-sensitive strip 502. Touch location data from the touch-sensitive strip 502 may include information from a single axis, along the touch-sensitive strip.

The plurality of characters 504 are rendered in a single line at the bottom of the touch-sensitive display 118. The strip is associated with each of the characters 504. To select a letter to add to one of the email fields, a touch is received on the touch-sensitive strip 502 under the desired letter and the touch is detected. The touch 506 is located along the strip 502, closest to the letter "S". The letter "S" and the two letters on each side of the S are identified. The plurality of characters 508, including the letters "Q", "R", "S", "T", and "U" are rendered in a larger size and with greater spacing between the letters. The area along the strip associated with the identified letters is also increased in size and the letter "S" is indicated, for example, by a selection box 510 rendered around the letter. Any change in touch location along the strip 502 is detected and, when the touch location is moved, the indicator is moved. A letter may be selected in any suitable manner. Optionally, the letter may be selected when a threshold force on the touch-sensitive strip 504 is exceeded. Alternatively, the letter may be selected when the touch ends or when a further input is received such as input from a button or from the dome switch actuator when a dome switch actuator is utilized.

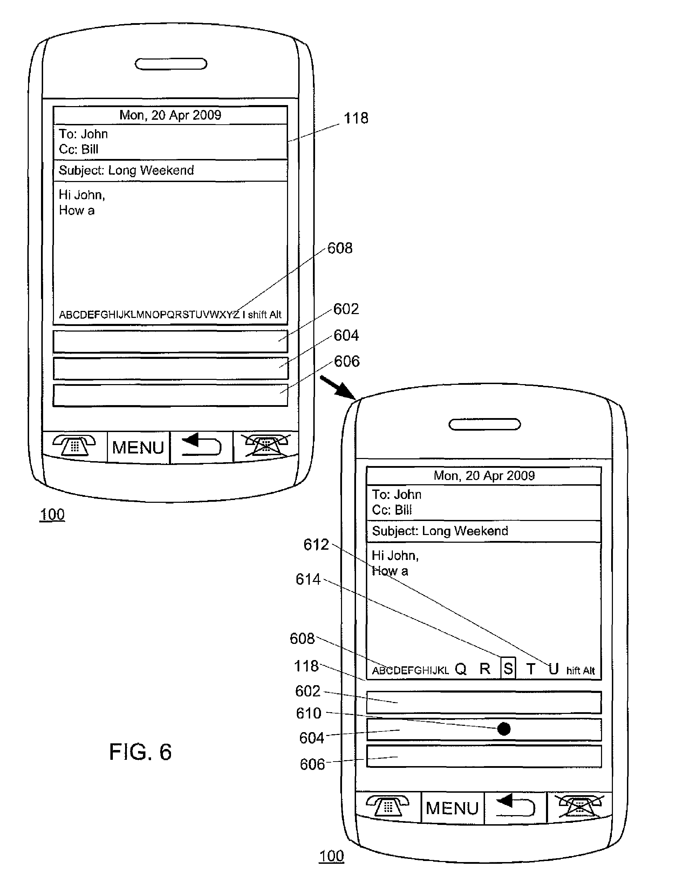

A front view of another example of a portable electronic device 100 including a touch-sensitive display 118 before and after receiving a touch at a touch-sensitive strip is shown in FIG. 6. In the example of FIG. 6, the portable electronic device 100 includes three touch-sensitive strips 602, 604, 606 in addition to the touch-sensitive display 118. The touch-sensitive strips 602, 604, 606 may be capacitive touch-sensitive strips, resistive touch-sensitive strips or any other suitable touch-sensitive strip for detecting one or more touches along each strip. The touch-sensitive strips 602, 604, 606 may be connected to the processor 102 through the controller 116, or may be connected via another controller. A touch on any of the touch-sensitive strips 602, 604, 606 may be detected and processed by the processor 102, for example, to determine the touch location. Touch location data from the touch-sensitive strips 602, 604, 606 may include information from a single axis, along each touch-sensitive strip.

The plurality of characters 608 are rendered in a single line at the bottom of the touch-sensitive display 118. One of the strips 602, 604, 606 is associated with each of the characters 608. To select a letter to add to one of the email fields, a touch is received on one of the touch-sensitive strips, such as the middle touch-sensitive strip 604 under the desired letter and the touch is detected. The touch 610 is located along the strip 604, in an area that is closest to the letter "S". The letter "S" and the two letters on each side of the S are identified. The identified characters 612 including the letters "Q", "R", "S", "T", and "U" are rendered in a larger size and with greater spacing between the letters. The area of the strip associated with the identified letter is also increased in size and the letter "S" is indicated, for example, by a selection box 510 rendered around the letter.

Optionally, the characters rendered in a line at the bottom of the touch-sensitive display may be displayed in response to receipt of a touch on the touch-sensitive strip. In the example of FIG. 6, each strip 602, 604, 606 may be associated with a different set of characters. For example, a plurality of numerals and punctuation characters may be rendered when a touch is received at one of the strips 602, 604, 606, a plurality of alphabetical letters may be rendered when a touch is received at another of the strips 602, 604, 606, and a plurality of symbols may be rendered when a touch is received at the third one of the strips 602, 604, 606.

Although the characters shown and described above extend in a single straight line, the characters may be rendered in any suitable pattern and may be displayed in any suitable location. Furthermore, the identified characters are not limited to the two characters on each side of the character that is closest to the touch location. Instead, the identified characters are a plurality of characters that includes 3 or more characters and the identification of these characters may be made in any suitable manner such as, for example, based on distance from the touch location. In the examples shown and described, the characters are rendered in a line in a portrait orientation of the portable electronic device 100. Optionally, the characters may be rendered in a landscape orientation for selection.

The control of the portable electronic device facilitates selection of, for example, a character such as a letter, numeral, punctuation, or other character, including characters other than the alphabetical characters shown. A detected touch on a touch-sensitive input such as the touch-sensitive display or a touch-sensitive area may be utilized to identify a plurality of characters that are displayed in a larger area than the area in which the characters are displayed prior to the touch, with larger associated areas. The display of characters in a larger area and the increase in associated areas increases accuracy of selection and thereby facilitates selection of the character. Characters may be displayed in a relatively small space on a display and with a relatively small area for selection compared to, for example, a traditional keyboard. Furthermore, other characters including characters for other languages may also be displayed and selected from. The area for displaying other information is greater, facilitating the display of further information. A much smaller space may be utilized for entry of characters than the space required when a keyboard is utilized and the selection and entry of characters may be more reliably carried out.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
rendering characters on a display of a portable electronic device;
detecting a touch and determining a touch location on a touch-sensitive input device;
identifying a plurality of the characters that are rendered near the touch location, the plurality of the characters rendered in a first area; and
rendering the plurality of the characters in a second area, the second area being larger than the first area.

2. The method according to claim 1, comprising receiving a selection of one of the plurality of the characters.

3. The method according to claim 1, comprising indicating a first one of the plurality of characters for selection.

4. The method according to claim 3, comprising detecting a change in the touch location and, in response to detecting the change, indicating a second one of the plurality of characters for selection, wherein the second one of the plurality of characters is identified based on the direction of the change.

5. The method according to claim 1, wherein identifying the plurality of the characters comprises identifying the closest plurality of characters to the touch location.

6. The method according to claim 5, wherein identifying the closest plurality comprises identifying a preset number of closest characters.

7. The method according to claim 1, wherein re-rendering comprises re-rendering the characters in a larger size.

8. The method according to claim 1, wherein re-rendering comprises re-rendering with a larger spacing between the characters.

9. The method according to claim 1, wherein the second area includes the first area.

10. A computer-readable medium having computer-readable code embodied therein, the computer-readable code executable by a processor of a portable electronic device to perform the method of claim 1.

11. A portable electronic device comprising:
a display configured to display characters;
a touch-sensitive input device configured to receive a touch and determine a touch location; and
a processor configured to:
identify a plurality of the characters that are displayed near the touch location, the plurality of the characters rendered in a first area; and
cause the display to display the plurality of the characters in a second area, the second area being larger than the first area.

12. The portable electronic device according to claim 11, wherein the touch-sensitive input device comprises a touch-sensitive input strip near the display.

13. The portable electronic device according to claim 12, wherein the touch-sensitive input device comprises a plurality of touch-sensitive input strips near the display.

14. The portable electronic device according to claim 11, wherein the touch-sensitive input device comprises a touch-sensitive overlay on the display.
